(19) Europäisches Patentamt
European Patent Office
Office européen des brevets

(11) **EP 1 359 414 B1**

(12) **EUROPÄISCHE PATENTSCHRIFT**

(45) Veröffentlichungstag und Bekanntmachung des Hinweises auf die Patenterteilung:
**26.05.2010 Patentblatt 2010/21**

(51) Int Cl.:
***G01N 33/00*** *(2006.01)*

(21) Anmeldenummer: **03090130.0**

(22) Anmeldetag: **28.04.2003**

(54) **Messzelle und -verfahren zur Bestimmung verschiedener Einzelgaskonzentrationen in fluiden Medien**

Measurement cell and method for determining the concentration of different gases in a fluid medium

Cellule de mesure et procédé pour déterminer des concentrations de gaz différents dans un milieu fluide

(84) Benannte Vertragsstaaten:
**AT BE BG CH CY CZ DE DK EE ES FI FR GB GR HU IE IT LI LU MC NL PT RO SE SI SK TR**

(30) Priorität: **29.04.2002 DE 10220944**

(43) Veröffentlichungstag der Anmeldung:
**05.11.2003 Patentblatt 2003/45**

(73) Patentinhaber: **Helmholtz-Zentrum für Umweltforschung GmbH-UFZ**
**04318 Leipzig (DE)**

(72) Erfinder:
• **Lazik, Detlef**
**06198 Salzmünde (DE)**
• **Geistlinger, Helmut**
**04107 Leipzig (DE)**
• **Eichhorst, Peter**
**16540 Hohen Neuendorf (DE)**
• **Kamusewitz, Helmut**
**14513 Teltow (DE)**

(74) Vertreter: **Hengelhaupt, Jürgen et al**
**Gulde Hengelhaupt Ziebig & Schneider**
**Patentanwälte - Rechtsanwälte**
**Wallstrasse 58/59**
**10179 Berlin (DE)**

(56) Entgegenhaltungen:
**EP-A2- 0 429 397    WO-A-01/53796**
**US-A- 5 469 732    US-A- 5 516 489**

**Beschreibung**

Die Erfindung betrifft ein Messverfahren zur Bestimmung der Einzelgaskonzentrationen in gasförmigen und nichtgasförmigen fluiden Medien sowie eine nach dem Verfahren arbeitende Messzelle. Die Gaskomponenten können in gelöster oder ungelöster Form in dem Fluid vorliegen.

Zur Bestimmung der Konzentration einzelner Gaskomponenten von Gasen in Flüssigkeiten sind verschiedene Verfahren bekannt, bei denen das zu analysierende Gas zunächst aus der Flüssigkeit durch eine Membran permeiert und anschließend durch geeignete Messverfahren nachgewiesen wird.

Aus DE 196 24 844 C2 ist ein Verfahren bekannt, basierend auf einem optischen Messprinzip zur Gasmessung, wobei sich in Abhängigkeit von der Gelöst-Gaskonzentration die optischen Absorptionseigenschaften einer chemisch und biologisch inerten Flüssigkeit ändern.

Eine weitere Lösung nach DE 197 05 195 A1 basiert auf einer gasinduzierten chemischen Farbumschlagsreaktion in einem Farbreaktionsröhrchen (Dräger-Röhrchen).

In beiden Lösungen dient eine mikroporöse Polymermembran als halbdurchlässige Phasengrenze zwischen flüssiger und flüssiger bzw. flüssiger und gasförmiger Phase. In beiden Fällen verhindert die halbdurchlässige Membran das Eindringen der Flüssigkeitsteilchen aus dem Außenraum in den Innenraum, während Gasteilchen die Membran passieren können. Die Membran übernimmt allein eine passive Transducer-Funktion.

Die US 5.469.732 lehrt die Analyse von Gaskomponenten in einem Gasgemisch, wobei des Messgas durch einen porösen Filter mit einer Messkammer verbunden ist, in der ein Drucksensor die zeitliche Änderung des Drucks aufzeichnet, wobei der Druck des Messgases geeignet moduliert wird und der Drucksensor das Amplituden-Zeit-Verhalten aufzeichnet, dass durch die unterschiedlichen Diffusionszeiten der Gaskomponenten durch den porösen Filter hervorgerufen wird.

In US 4,112,737 wird dargestellt, dass ein Gas (fault-gas) über eine semipermeable Membran von einem Lösungsmittel (oil) getrennt und einer analytischen Prozedur zur Bestimmung unterzogen wird, z.B. mittels Gaschromatographie.

Das Patent US 3,871,228 beschreibt ein Verfahren, nach dem der Gleichgewichtsdruck der gelösten Gase in einem Lösungsmittel (Wasser) ermittelt wird.

US 4,662,210 beschreibt gleichfalls ein Gerät zur Bestimmung des totalen Gleichgewichtsdruckes von in einem Lösungsmittel gelösten Gasen, wobei zusätzlich Temperatur, barometrischer Druck und über einen separaten Sensor die Sauerstoffkonzentration bestimmt werden.

US 5,763,762 ermittelt den Gleichgewichtsdruck eines in einem Lösungsmittel vorhandenen Gases.

Mit dem Gerät sollen in weniger als 5 Minuten 99 % Gleichgewichtsdruck erreicht und der Gasdruck in einem bestimmten Lösungsmittel, z.B. Öl, über ein geeignetes Polymer innerhalb von 5 Minuten zu 99 % zu erfassen sein. Das Gerät ist z.B. für Lebensmittel, Pharmaka und Erfrischungsgetränke anwendbar. Das Messprinzip basiert ebenfalls auf der Messung des Gleichgewichtsdruckes aller gelösten Gase. Die Einstellung des Gleichgewichtes wird durch die Relaxationszeit des Gases mit dem kleinsten Diffusionskoeffizienten bestimmt.

Mit der Messung des Gleichgewichtsdruckes bei den vorgenannten Verfahren können allein noch keine Konzentrationen der beteiligten Gaskomponenten selektiv ermittelt werden. Dies erfordert in jedem Fall eine weitergehende Gasanalyse.

Mit der DE 199 25 842 A1 ist ein Verfahren bekannt geworden, das die selektive Bestimmung der Konzentration oder des Partialdruckes von Gaskomponenten erlaubt, die in einem Fluid enthalten sind. Ein hohles, nach außen abgeschlossenes Gefäß besitzt eine Wandung aus einer gasspezifisch durchlässigen Membran (z.B. Polymer). Dieses Gefäß wird in das Fluid eingetaucht, so dass die Wandung Berührung mit dem Fluid hat. Gemessen wird in dem Gefäß die Druckänderungsgeschwindigkeit, die - wie festgestellt werden konnte - der Gaskonzentration proportional ist. Benutzt man mehrere Gefäße mit Kunststoffmembranen unterschiedlicher Gasselektivität, so lassen sich die Messwerte miteinander in einem Gleichungssystem ins Verhältnis setzen und Werte für die Konzentration einzelner Gaskomponenten in dem Fluid gewinnen.

Das Verfahren hat für In-Situ-Messungen teilweise den Nachteil, dass schlauchförmige Messleitungen mit für die Messung wirksamen Schlauchabschnitten aus gasspezifisch durchlässigen Materialien im Untersuchungsobjekt, z.B. wasserführenden Bodenschichten, Deponien, Bioreaktoren, verlegt werden müssen. Die Schläuche sind dabei in Abhängigkeit von der Einbautiefe eventuell hohen Drücken oder mechanischen Beanspruchungen ausgesetzt und müssen deshalb entsprechende Wandstärken besitzen. Damit wird die Gaspermeabilität herabgesetzt und die Messung verläuft entsprechend langsam.

Der Erfindung liegt die Aufgabe zugrunde, das oben beschriebene Verfahren so zu variieren, dass es universell für die Bestimmung der Einzelgaskonzentration in fluiden Medien geeignet ist, unabhängig von den Druckverhältnissen am Messort arbeitet und schnell ein Messergebnis liefert. Außerdem soll eine entsprechende Messzelle angegeben werden.

Erfindungsgemäß wird die Aufgabe gelöst durch die Merkmale der Ansprüche 1 und 11. Zweckmäßige Ausgestaltungen sind Gegenstand der Unteransprüche.

Erfindungsgemäß werden das zu analysierende Fluid oder-nach vorangegangener Phasentrennung - die im Fluid enthaltenen Gase mittels einer geeigneten Pump- und Ventilvorrichtung und gegebenenfalls notwendiger Arbeitsfluide (z.B. Spülgasgemische) einem Probenraum einer Messzelle zugeführt. Dieser Probenraum kann aus einer oder aus mehreren Kammern bestehen und enthält zweckmäßig Druckund Temperatursensoren. Der Probenraum ist über unterschiedliche, gasselektive Membranen mit separaten Messkammern verbunden. Die Membranen bestehen zweckmäßig aus einem Film aus einem einheitlichen Material, ca. 10 bis 50 μm dick, oder werden durch geeignete Träger oder Stützkörper vor mechanischer Verformung geschützt. Jede Messkammer enthält mindestens einen Drucksensor und kann diffusiv durch die vorgelagerte Membran oder konvektiv durch eine geeignete Pump- und Ventilvorrichtung mit Gasgemischen versorgt werden. Die Zahl der Messkammern ist gleich der Zahl der zu detektierenden Einzelgase oder größer. Das System aus Probenräumen und Messkammern, inklusive Membran, Sensorik und Fluidsteuerung, bildet zusammen die Messzelle. Je nach Anwendungsziel kann die einzelne Messzelle unterschiedlich komplex und die Vorrichtung aus einer beliebigen Zahl derartiger Messzellen, also modular, aufgebaut und auch miniaturisiert ausgeführt sein.

Es können zwei Varianten des Messverfahrens angewendet werden, die jeweils zwei Schritte aufweisen. Im ersten Schritt wird der Ausgangszustand in der Messzelle eingestellt (Konditionierung), während der zweite Schritt die eigentliche Messung betrifft.

Messverfahren I: Beidseitig einer jeden Membran wird eine einheitliche Gaszusammensetzung eingestellt, indem der Probenraum mit einem Spülgas gespült wird, wobei die Messkammern über die Membranen diffusionsgespült werden. Der Ausgangszustand ist erreicht, wenn auch innerhalb der Membran diese Gaszusammensetzung vorliegt.

Messverfahren II: Die Membranen werden über den Probenraum mit dem zu analysierenden Fluid beaufschlagt, während in die Messkammern ein Spülgas anderer Zusammensetzung eingeführt wird. Eine permanente Zuführung sowohl des Probenfluides als auch des Spülgases bewirkt eine ständige Verdünnung der wechselseitig durch die Membran permeierenden Gase. Als Ausgangszustand gilt ein stationärer Fluss aller permeierenden Gase.

Der zeitlich folgende Messschritt beginnt in Abhängigkeit des gewählten Spülverfahrens mit:

Messverfahren I: der vollständigen, möglichst schnellen Substitution des Gases im Probenraum durch das zu analysierende Fluid,

Messverfahren II: dem Abbruch des Spül-Gasstromes und dem zeitlich verzögerten Verschluss der Messkammern. Letzter ermöglicht den Abbau des Staudrucks.

In beiden Verfahrensvarianten permeieren die einzelnen Komponenten der Gasgemische der Probenräume und Messkammern membranspezifisch und bewirken dadurch in den einzelnen Messkammern unterschiedliche, aber charakteristische Partialdruckänderungen, die dort über jeweils herkömmliche Messungen der Druckänderung als Funktion der Zeit erfasst werden. Die Auswertung der Messung nutzt die individuellen Druck-Zeit-Funktionen aller Messkammern zur computergestützten Lösung eines bestimmten oder überbestimmten Gleichungssystems zur Quantifizierung der Einzelgaskomponenten gemäß den in DE 199 25 842 A1 beschriebenen theoretischen Zusammenhängen.

Beide Varianten des Messverfahrens gestatten die Ermittlung der Einzelgaskonzentrationen mittels der beschriebenen Messzellen oder durch Kombination der Messzellen zu Paaren mit paarweise gleichen Membranen, die jeweils simultan, jedoch mit zueinander invertierter Medienbeaufschlagung betrieben werden (Differenzmesszelle).

Aufgrund der Spiegelsymmetrie der Permeationen in Differenzmesszellen erhöht sich die Sensitivität gegenüber nur einzeln angeordneten Messzellen durch die Messung des Differenzdruckes zwischen den jeweiligen Messkammern. Ist der Druckanstieg in der einen Messzelle nämlich positiv, verläuft er wegen der gegenläufig orientierten Diffusion in der anderen Messzelle negativ und umgekehrt, so dass bei einer Subtraktion der gemessenen Drücke ein höheres Messsignal erzeugt wird.

Die Steuerung der Taktgeschwindigkeit aufeinander folgender Messungen erfolgt für beide Verfahrensvarianten durch die Verfolgung der Druck-Zeit-Funktion in den Messkammern und gegebenenfalls in dem oder den Probenräumen. Die Konditionierung ist abgeschlossen, wenn die zeitliche Druckänderung aller Zellen Null wird.

Die Messzelle offenbart ihre Vorteile besonders im In-Situ-Monitoring beispielsweise von Messstellen in wasserführenden Bodenschichten. Eine In-Situ-Messung wird dann realisiert, indem der Probenraum der Messzelle mit einer gasdichten, gasgefüllten Ringleitung verbunden wird, in die ein Probenahmeelement eingefügt ist, das an einem überwachungsbedürftigen Ort mit Kontakt zu dem zu analysierenden Fluid platziert wird. Nach einer Druckänderung im Probenraum wird das im Probenahmeelement angesammelte Gas in den Probenraum befördert und der Spülgasstrom durch die Messkammern gestartet. Nach Einstellung eines Gleichgewichtsdruckes im Probenraum wird der Spülgasstrom in den Messkammern wieder unterbrochen und die Messung der Einzelgaskomponenten kann begonnen werden.

Als eine zweckmäßige Variante kann zusätzlich eine nichtselektive Messkammer an den Probenraum gekoppelt werden (Kopplung durch eine Hochpermeable Membran, z.B. Silikon). Diese Messkammer dient der schnellen Bestimmung des absoluten Drucks der z.B. auch in einem flüssigen Medium gelösten Gase. Alternativ kann entweder die Druckkonstanz in einer geeigneten selektiven Messkammer abgewartet oder im Fall der Messung an Gasen der statische Druck im Probenraum gemessen werden. Die Messgröße liefert entsprechend dem Dalton'schen Gesetz ein unabhängiges Gütefunktional für die Richtigkeit der während der Messung ermittelten Partialdrücke und liefert gleichzeitig das Abbruchkriterium für den Messtakt.

Der Vorteil von Verfahrensvariante I besteht insbesondere in der einfachen Möglichkeit, den Gleichgewichtszustand zu erreichen und damit in einem konstruktiv einfachen Messzellenaufbau. Dahingegen liefert die Verfahrensvariante II die Stationarität des maximalen Diffusionsstromes im Moment des Messtaktbeginns und ermöglicht dadurch eine schnelle Messung sowie die Linearisierung der Messtheorie. Beim Spülen werden hier außerdem Kontaminationen aus Probenraum, Membran und Messkammern wie auch aus dem Zuleitungssystem ausgewaschen.

Die Gasanalyse an gasförmigen Medien ist nach den hier beschriebenen Varianten des Messverfahrens permeations- und konvektionsgespült mittels einfacher Druckmessung oder Differenzmesszellen-Anordnung möglich. Gleiches gilt für flüssige oder dampfförmige Medien, deren gelöste Gase über eine geeignete hochpermeable Membran, z.B. ein im Probenahmegerät eingebetteter/vorgeschalteter Silikonschlauch oder ein den Probenräumen vorgeschalteter Hohlfasermodul, in die Gasphase (entsprechend dem Henry'schen Gleichgewicht) überführt werden.

Die Messzellen sind einfach aufgebaut und sind vergleichsweise kostengünstig gegenüber der Gaschromatographie oder Massenspektrometrie. Die Messmethoden sind für beliebige gelöste und nichtgelöste Gase geeignet. Dadurch, dass die gasspezifische Diffusion nicht wie in DE 199 25 842 A1 am Ort der Probenahme erfolgen muss, sondern gegebenenfalls durch ein zweistufiges Verfahren an einem anderen geeigneten Ort stattfinden kann, können die Membranen der Messzelle sehr dünn ausgeführt werden. Die Messung wird damit wesentlich schneller.

Der modulare Aufbau der Messzelle schafft die Möglichkeit, ein Gas mit mehreren Komponenten zu analysieren, wofür man mit dem Blick auf die zu erwartenden Komponenten und deren Anzahl zweckmäßig ebenso viele Membranen mit möglichst unterschiedlichen Selektivitäten auswählt. Jede weitere Membran erlaubt die Genauigkeit der Messung zu verbessern.

Die Messung kann zur statistischen Absicherung mehrfach wiederholt werden. Vor der Messung kann das Gas jeweils in den Messkammern einheitlich oder verschieden frei gewählt werden. Auch eine Wiederholungsmessung mit anderem Spülgas in den Messkammern ist denkbar und kann die Messgenauigkeit verbessern.

Mehrere Membranen können zeitgleich über den Probenraum mit dem zu analysierenden Gasgemisch beaufschlagt werden. Der Steuer- und Regelaufwand sinkt gegenüber einer möglichen Anordnung mit in Reihe angeordneten Messzellen mit jeweils einem Probenraum und einer Messkammer, zum anderen bewirkt die Geometrie eine effektive Spülung von Probenraum und Messkammern (Eindimensional-advektiv- und diffusiver Transport).

Die Erfindung soll nachstehend anhand von Ausführungsbeispielen näher erläutert werden. In den Zeichnungen zeigen:

Fig. 1:      einen Schnitt durch eine erfindungsgemäße Messzelle für zweikomponentige Gase,

Fig. 2:      das Prinzip einer Messzellengeometrie für 2- bis 6-komponentige Gase

Fig. 3      die Verwendung einer erfindungsgemäßen Messzelle in einem ereignisorientierten Messsystem und

Fig. 4-6      die Ergebnisse einer Simulation für drei Gaskomponenten.

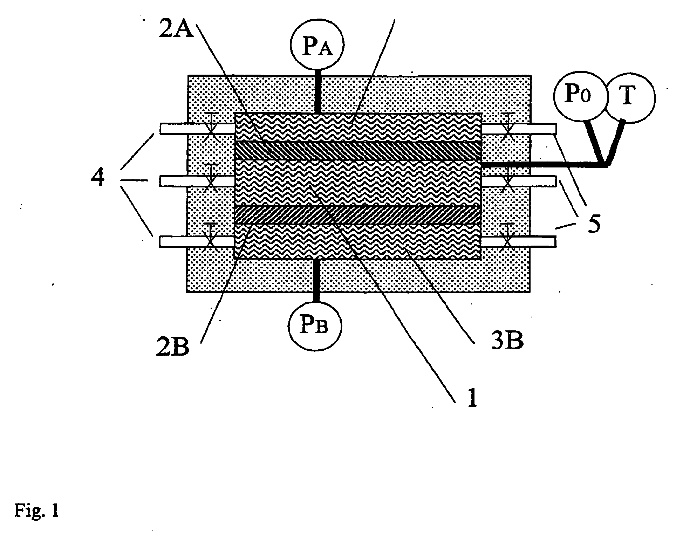

In Fig. 1 ist der prinzipielle Aufbau einer Messzelle für die Bestimmung von Gasen mit zwei Gaskomponenten gemäß der Verfahrensvariante II dargestellt. Die Messzelle besteht aus einem inneren Probenraum 1, der gegebenenfalls mit einem Stützkörper gefüllt ist. Von dem Probenraum 1 durch jeweils eine Membran 2A und 2B getrennt, befinden sich an zwei Seiten anliegende Messkammern 3A und 3B. Zum Zu- und Ablauf von zu analysierendem Gas und von Spülgas sind mit Ventilen verschließbare Zuführungsleitungen 4 und Abführungsleitungen 5 vorgesehen. Der Gasdruck im Probenraum 1 wird mit einem Drucksensor $P_0$, der der Messkammern 3A, 3B mit Drucksensoren $P_A$, $P_B$ gemessen. Außerdem wird die Temperatur des analysierenden Gases im Probenraum 1 mit einem Temperatursensor T erfasst.

Wenn eine dichte, jedoch für Gase permeable Membran, zwei Räume trennt und jeweils dasselbe Gas auf beiden Seiten der Membran die angrenzenden Räume füllt, dann steht das System im thermodynamischen Gleichgewicht, wenn die Temperatur und die chemischen Potentiale der jeweiligen Gaskomponente gleich sind. Dies ist der Ausgangszustand, der nunmehr wie folgt verändert wird: Im Probenraum 1 wird das vorhandene Gas vollständig durch ein anderes Gas ersetzt. Die Substitution des Gases bewirkt eine Änderung der chemischen Potentiale und führt zu einer konzentrationsgetriebenen Permeation vom Probenraum in die auf der anderen Seite der Membran liegende Messkammer 3 und umgekehrt. Für den Fluss $J_k$ einer Gaskomponente k gilt:

$$J_k = -\frac{S_k D_k (p_{F,k} - p_{P,k})}{1}$$

wobei k = l ...n und
$S_k$ die Löslichkeit, $D_k$ der Diffusionskoeffizient, $p_{F,k}$ bzw. $p_{P,k}$ der Partialdruck in Probenraum und Messkammern und 1 die Membrandicke sind.

Eine für beide Gase möglichst selektive Membran bewirkt einen hohen Differenzdruck, der als Funktion der Zeit ein Maximum durchläuft und im Zuge des Konzentrationsausgleiches wieder abgebaut wird.

Um ein ausgeglichenes Temperaturverhalten über den Messzeitraum zu erreichen, wird der die Messzelle umhüllende Körper thermisch träge (hohe Wärmekapazität) bei hoher Temperaturleitfähigkeit ausgelegt, wobei die Gase durch hinreichend dimensionierten Kontakt der Zuführungsleitungen 4 mit dem Hüllkörper einheitlich temperiert werden.

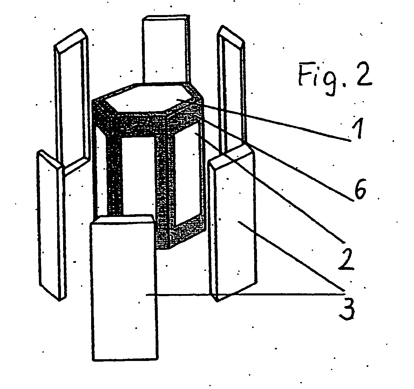

Mit einer räumlichen Anordnung, wie sie beispielsweise Fig. 2 zeigt, wird es möglich, die Zahl der zu analysierenden Gase unter Beibehaltung der oben aufgeführten Vorteile zu erweitern. Der sechseckige Querschnitt des Probenraumes 1 erlaubt hier die Anordnung von sechs Membranen 2, die auf die sechs Auflageflächen 6 des Grundkörpers aufgelegt sind, und entsprechend sechs Messkammern 3.

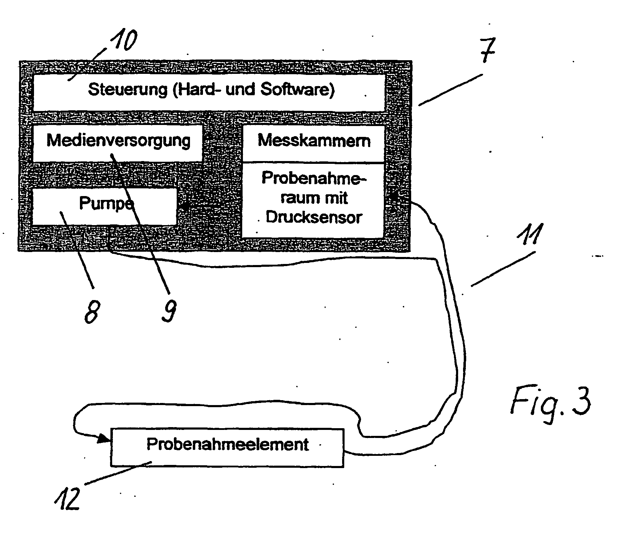

In Fig. 3 ist ein Monitoringsystem zur Überwachung von Grundwasserleitern, Seekörpern, technischen Anlagen, Bergwerken, etc. auf der Grundlage der erfindungsgemäßen Messzelle dargestellt.

Monitoringaufgaben werden nur dann optimal gelöst, wenn die Monitoringsysteme in der Lage sind, ereignisorientiert zu reagieren. Für eine ereignisorientiert durchgeführte Messreihe ist es wichtig, dass die tatsächlichen Veränderungen der Fluidzusammensetzung im Bereich der Probenahmestelle mit minimaler Messwertdichte erfasst werden können. Die Forderung besteht nach

- einem minimalen Eingriff ins System,
- einem minimalen Verbrauch an Ressourcen ($\rightarrow$ Spülgas, Verschleiß der aktiven Bauelemente) für die Messung und
- einem Minimum an aufzuwendender Energie (z.B. wichtig für Feldanwendung oder Handgeräte, da die Stromversorgung dann im allgemeinen über Batterien erfolgt).

Der ereignisorientierte Messablauf wird mit dem Messsystem nach Fig. 3 wie folgt realisiert. Das Messsystem besteht aus

- einer aktiven Messzelle 7 mit

  o einer geeigneten Gasfördereinrichtung, z.B. einer Pumpe 8,
  o einer Medienversorgung 9, (Stromversorgung, Spülgasversorgung),
  o einer elektronischen Regelung 10 (Hardware und Software), die im Minimum ereignisorientiert oder nach einem vorgegebenen Zeitplan den Messvorgang einleitet, überwacht, einfache mathematische Operation auszuführen in der Lage ist, die Daten (Messwerte, ermittelte Konzentrationen, ...) auf einem Medium zu speichern und nach abgeschlossener Messung das Messsystem wieder in den definierten Ausgangszustand (Ruhezustand) zurückzuführen. Weiter realisiert die Steuerung den Überlastungsschutz für die Drucksensoren
  o einem Probenraum 1 und Messkammern 3,

- einer kleinvolumigen, medienverträglichen und gasdichten Ringleitung 11,
- einem gaspermeablen, medienverträglichen Probenahmeelement 12, das in die Ringleitung 11 eingefügt ist.

Die Komponenten des Messsystems können in einem kompakten Messgerät ausgeführt oder räumlich getrennt installiert werden. Unterschiede zwischen beiden Varianten resultieren insbesondere für die Länge der gasdichten Ringleitung 11 zwischen Probenahmeelement 12 und Messzelle 7.

Eine Veränderung der Gaszusammensetzung im überwachungsbedürftigen Raum bewirkt eine temporäre oder bleibende Änderung des Druckes im Probenahmeelement 12 (beispielsweise ein ggf. mechanisch gegen Deformation geschützter Silikonschlauch), innerhalb derer sich die Partialdrücke aller Gase zwischen Außen- und Innenraum ausgleichen. Diese Druckänderung wird über Schallgeschwindigkeit (Pascalsches Prinzip) an den Drucksensor im Probenraum 1 der Messzelle 7 vermittelt. Durch die elektronische Steuerung 10 wird auf dieses Ereignis hin die Pumpe 8 aktiviert, die das im System vorhandene Gas durch die Ringleitung 11 in das Probenahmeelement 12 fördert und dabei das dort befindliche Gas in den Probenraum 1 der Messzelle 7 treibt. Zeitgleich zur Inbetriebnahme der Pumpe 8 wird durch die Messkammern 3 der Spülgasstrom angelegt.

(Da das Probenahmeelement 12 groß und gasdurchlässiger im Vergleich zu den in der Messzelle verwendeten Membranen 2 gestaltet werden kann, ist eine Beeinflussung der Gaszusammensetzung im probenahmeaktiven Teil der Messanordnung vernachlässigbar, kann jedoch in jedem Fall auch durch eine Kalibrierung rückgerechnet werden.)

Der im Kreis geführte und zu messende Gasstrom wird abermals zu einer Druckänderung führen. Diese Druckänderung läuft asymptotisch gegen einen Gleichgewichtsdruck. Ist dieser Gleichgewichtsdruck erreicht, hat sich die Gaszusammensetzung in Ringleitung 11, Probenahmeelement 12 und Messzelle 7 der Gaszusammensetzung der Umgebung angeglichen. Dieser Gleichgewichtsdruck entspricht der Summe der Partialdrücke der Gase des Außenraums (das Kontroll- und Abbruchkriterium für die nun erfolgende Messung). Entsprechend Verfahrensvariante II wird nun der Spülgasstrom unterbrochen, die Messkammern 3 werden verschlossen und es erfolgt die Registrierung der jeweiligen Druckänderungen in den einzelnen Messkammern 3. Die implementierte Software ermittelt aus den Druck-Zeit-Funktionen die Partialdrücke (Fugazitäten) und vergleicht deren Summe mit dem gemessenen Gleichgewichtsdruck. Ist eine hinreichende Annäherung erreicht, wird die Messung abgeschlossen, die ermittelten Parameter inklusive der Temperatur werden gespeichert. Das Messsystem wird wieder in seinen Ruhezustand überführt, wobei bis auf die Überwachung des Drucks im probenahmeaktiven Teil der Messanordnung sonstige medienverbrauchende Komponenten (Pumpe, Ventile, ...) abgeschaltet werden können.

Die Steuerung des Messsystems gewährleistet alternativ, dass Messungen nach einem vorgebbaren Zeitregime oder kontinuierlich durchgeführt werden können.

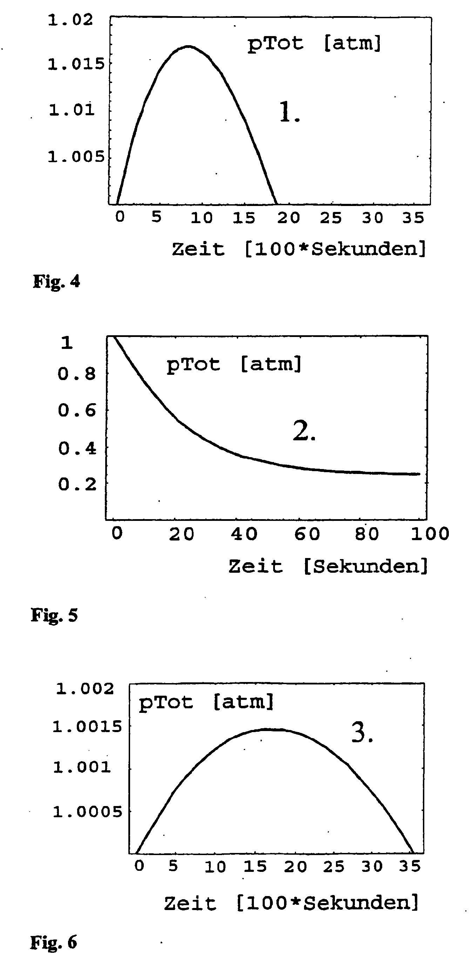

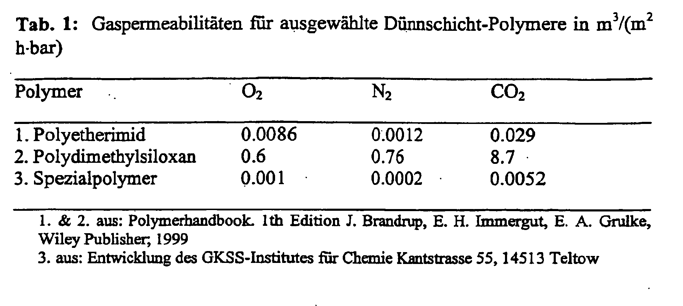

Die Figuren 4 bis 6 zeigen die Ergebnisse einer Simulation eines Messsystem für ein dreikomponentiges Gas. Eine Messzelle mit drei Messkammern entsprechend Fig. 2 (Länge = 11,6 cm, Breite = 2,6 cm, Höhe = 4 mm) und den in Tabelle 2 aufgeführten Membranen (angenommene Schichtdicke = 10 $\mu$m) wurden einer Simulation der Gesamtdruckkurven zugrunde gelegt.

Das zu analysierende Gasgemisch im Probenraum bestand aus den drei Komponenten Sauerstoff, Stickstoff und Kohlendioxid mit den Partialdrücken $p_{02}$ = 0,2 atm, $p_{N2}$ = 0,04 atm, $p_{CO2}$ = 0,00345. Als Spülgas für die Messkammern wurde Stickstoff bei 1 atm verwendet. Als Membranen dienten 1. Polyetherimid, 2. Polydimethylsiloxan und 3. ein Spezialpolymer der Firma GKSS Teltow.

Tabelle 1 zeigt, dass die drei ausgewählten Membranen eine verschiedene Reihenfolge der Gaspermeabilitäten gegenüber den verwendeten Gaskomponenten haben. Mit Hilfe der instationären Lösung der Diffusionsgleichung mit stationärer Anfangsbedingung in der Membran wurde der zeitliche Verlauf des Druckes in der jeweiligen Messkammer simuliert. Man beachte die unterschiedliche Zeit- und Druckskalen. Da die Permeabilitäten von Polydimethylsiloxan um zwei Größenordnungen über denen von Polyetherimid und dem Spezialpolymer liegen, wird der Gleichgewichtszustand schon nach ca. 100 Sekunden erreicht.

Zur Berücksichtigung des Messfehlers wurde das Messsignal, d.h. die jeweilige Druckkurve, mit 1 % des Messsignals zufällig verrauscht. Die Lösung des linearen Gleichungssystems für drei Gase und drei Messkammern und eine Mittelwertbildung über zehn aufeinanderfolgend simulierte Messungen, liefert die folgenden Partialdrücke: $P_{O2}$ = 0,2004 atm, $p_{N2}$ = 0,0419 atm, $p_{CO2}$

= 0,0033 atm.

## Bezugszeichenliste

1 Probenraum
2A Membran
2B Membran
3A Messkammer
3B Messkammer
4 Zuführungsleitung
5 Abführungsleitung
6 Auflagefläche
7 Aktive Messzelle
8 Pumpe
9 Medienversorgung
10 Elektrische Regelung
11 Ringleitung
12 Probenahmeelement

## Patentansprüche

1. Messverfahren zur Bestimmung der Einzelgaskonzentrationen in fluiden Medien,
   **dadurch gekennzeichnet, dass**
   das zu analysierende Fluid oder die im Fluid enthaltenen Gase durch mindestens einen Probenraum einer Messzelle geleitet werden, aus dem sie über jeweils eine gasspezifisch durchlässige Membran in abgeschlossene, mit einem Spülgas befüllbare Messkammern permeieren können, dass der von der Konzentration der Gaskomponenten und dem gewählten Spülgas abhängige Zeitverlauf der Druckänderung in der jeweiligen Messkammer und die Temperatur der Messzelle gemessen und registriert und daraus vermittels eines Gleichungssystems die gesuchten Konzentrationen ermittelt werden, wobei die Messung durch ein unabhängiges Güte- und Abbruchkriterium kontrolliert wird.

2. Verfahren nach Anspruch 1,
   **dadurch gekennzeichnet, dass**
   die zu analysierenden Gase vor dem Einleiten in die Messkammer aus dem Fluid durch Phasentrennung gewonnen werden.

3. Verfahren nach Anspruch 1 oder 2,
   **dadurch gekennzeichnet, dass**
   vor einer Messung der Probenraum mit einem bekannten Spülgas gespült wird, während die Messkammern verschlossen sind.

4. Verfahren nach Anspruch 1 oder 2,
   **dadurch gekennzeichnet, dass**
   die Messkammern vor einer Messung kontinuierlich mit einem Spülgas gespült werden, während das zu analysierende Fluid oder die im Fluid enthaltenen Gase bereits durch den Probenraum geleitet werden und der Spülgasstrom bei Beginn einer Messung unterbrochen wird.

5. Verfahren nach Anspruch 2,
**dadurch gekennzeichnet, dass**

- der Probenraum der Messzelle mit einer gasdichten, gasgefüllten Ringleitung verbunden wird, in die ein Probenahmeelement eingefügt ist, das an einem überwachungsbedürftigen Ort mit Kontakt zu dem zu analysierenden Fluid platziert wird,
- nach einer Druckänderung im Probenraum das im Probenahmeelement angesammelte Gas in den Probenraum befördert und der Spülgasstrom durch die Messkammern gestartet wird,
- und nach Einstellung eines Gleichgewichtsdruckes im Probenraum der Spülgasstrom in den Messkammern unterbrochen und die Messung der Einzelgaskomponenten gestartet wird.

6. Verfahren nach Anspruch 5,
**dadurch gekennzeichnet, dass**
die Messanordnung, bestehend aus Messzelle, Ringleitung und Probenahmeelement als modulares System aufgebaut wird.

7. Verfahren nach den Ansprüchen 4 bis 6,
**dadurch gekennzeichnet, dass**
die Messkammern nach Unterbrechen des Spülgasstromes zeitlich verzögert verschlossen werden.

8. Verfahren nach den Ansprüchen 3 oder 4,
**dadurch gekennzeichnet, dass**
eine Messung erst dann vorgenommen wird, wenn die zeitliche Druckänderung im Probenraum und/oder in den Messkammern auf Null abgeklungen ist.

9. Verfahren nach einem der vorhergehenden Ansprüche,
**dadurch gekennzeichnet, dass**
mindestens zwei Probenräume vorhanden sind, deren zugehörige Messkammern paarweise Membranen mit gleicher Gasselektivität aufweisen, und dass der Zeitverlauf des Differenzdruckes paariger Messkammern gemessen wird.

10. Verfahren nach einem der vorhergehenden Ansprüche,
**dadurch gekennzeichnet, dass**
die Richtigkeit der ermittelten Partialdrücke anhand einer Druckmessung im Probenraum der Messzelle oder einer Messkammer mit einer für alle Gase gut permeablen Membran nach dem Dalton'schen Gesetz überprüft und vermittels einer festlegbaren Genauigkeitsschranke über dieses unabhängige Kriterium eine Abbruchschranke für die Messung definiert wird.

11. Messzelle zur Bestimmung der Einzelgaskonzentrationen in fluiden Medien,
**dadurch gekennzeichnet, dass**

- ein Probenraum (1) vorgesehen ist, der mit einem Gasein- und -auslass (4, 5) versehen ist, mit dem das zu analysierende Fluid oder die im Fluid enthaltenen Gase oder ein Spülgas ein- und ausgeleitet werden kann,
- an den Probenraum (1) durch jeweils eine gasspezifisch durchlässige Membran (2) von dem Probenraum (1) getrennt mehrere separate Messkammern (3) angrenzen,
- die Messkammern (3) mit einem verschließbaren Gasein- und -auslass (4, 5) für ein Spülgas versehen oder geschlossen sind,
- an der Messzelle ein Temperatursensor (T) angeordnet ist,
- und Probenraum (1) und Messkammern (3) mit Drucksensoren ($P_0$, $P_A$, $P_B$) ausgerüstet sind, die mit einem den Zeitverlauf der Druckänderung in der jeweiligen Messkammer (3) sowie die Temperatur der Messzelle registrierenden Aufzeichnungsgerät verbunden sind.

12. Messzelle nach Anspruch 11,
**dadurch gekennzeichnet, dass**
die Membranen (2) aus jeweils einem Film aus im wesentlichen einheitlichem Material bestehen.

13. Messzelle nach Anspruch 11,
**dadurch gekennzeichnet, dass**
die Membranen (2) auf mechanisch stützende Träger aufgesetzt sind.

14. Messzelle nach Anspruch 11,
**dadurch gekennzeichnet, dass**
die Membranen (2) auf Stützkörper aufgesetzt sind.

15. Messzelle nach einem der Ansprüche 11 bis 14,
**dadurch gekennzeichnet, dass**
jeweils zwei Probenräume mit ihren zugehörigenen Messkammern und gleicher Membrankombination zu einer Differenzmesszelle zusammengefasst sind.

16. Messzelle nach den Ansprüchen 11 bis 15,
**dadurch gekennzeichnet, dass**
der Probenraum (1) aus mehreren miteinander verbundenen Einzelkammern besteht.

17. Messzelle nach einem der Ansprüche 11 bis 16,
**dadurch gekennzeichnet, dass**
eine der Messkammern (3) mit einer für alle Gase gut permeablen Membran (2) gegen den Probenraum (1) abgetrennt ist.

**Claims**

1. Measurement method for determining the concentration of individual gases in a fluid medium, **characterized in that** the fluid to be analysed or the gases contained in the fluid are guided through at least one sample chamber of a measuring cell from which they can permeate via respectively one gas-specific permeable membrane into closed measurement chambers fillable with a rinsing gas, and wherein the time period of the pressure change in the respective measurement chamber which depends on the concentration of the gas components and the chosen rinsing gas and the temperature of the measurement cell are measured and registered, and the concentrations to be found are determined therefrom by a system of equations, the measurement being controlled by an independent quality- and break-off criterion.

2. The method according to claim 1, **characterized in that** the gases to be analysed are obtained from the fluid by phase separation prior to the introduction into the measurement chamber.

3. The method according to claim 1 or 2, **characterized in that,** prior to a measurement, the sample chamber is rinsed with a known rinsing gas while the measurement chambers are closed.

4. The method according to claim 1 or 2, **characterized in that,** prior to a measurement, the measurement chambers are continuously rinsed with a rinsing gas while the fluid to be analysed or the gases contained in the fluid are already guided through the sample chamber, and the rinsing gas stream is interrupted at the beginning of a measurement.

5. The method according to claim 2, **characterized in that**

   - the sample chamber of the measurement cell is connected to a gas-tight, gas-filled ring main in which a sample-taking element positioned in contact to the fluid to be analyzed at a place requiring supervision is inserted,
   - after a pressure change in the sample chamber, the gas accumulated in the sample-taking element is fed into the sample chamber, and the rinsing gas stream through the measurement chambers is started,
   - and, after regulating an equilibrium pressure in the sample chamber, the rinsing gas stream in the measurement chambers is interrupted and the measurement of the individual gas components is started.

6. The method according to claim 5, **characterized in that** the measurement arrangement consisting of a measurement cell, a ring main and a sample-taking element is constructed as a modular system.

7. The method according to claims 4 to 6, **characterized in that** the measurement chambers are closed in a temporally delayed manner after the interruption of the rinsing gas stream.

8. The method according to claims 3 or 4, **characterized in that** a measurement is not performed until the temporal pressure change in the sample chamber and/or in the measurement chambers has decayed to zero.

9. The method according to one of the preceding claims, **characterized in that** at least two sample chambers are provided the associated measurement chambers of which comprise paired membranes having the same gas selectivity, and **in that** the time period of the differential pressure of pairs of measurement chambers is measured.

10. The method according to one of the preceding claims, **characterized in that** the correctness of the determined partial pressures is verified, according to Dalton's law, on the basis of a pressure measurement in the sample chamber of the measurement cell or a measurement chamber having a membrane which is well-permeable for all gases, and a break-off barrier for the measurement is defined by this independent criterion by means of a precision barrier to be set.

11. Measurement cell for determining the concentration of individual gases in a fluid medium, **characterized in that**

   - a sample chamber (1) provided with a gas inlet and outlet (4, 5) is provided, through which the fluid to be analysed or the gases contained in the fluid or a rinsing gas can be introduced and discharged,
   - a number of separate membranes (3) separated from the sample chamber (1) by respectively one gas-specific permeable membrane (2) are adjacent to the sample chamber (1),
   - the measurement chambers (3) are provided with a closable gas inlet or outlet (4, 5) for a rinsing gas or are closed,
   - a temperature sensor (T) is disposed at the measurement cell,

- and the sample chamber (1) and the measurement chambers (3) are provided with pressure sensors ($P_0$, $P_A$, $P_B$) which are connected to a recording device registering the time period of the pressure change in the respective measurement chamber (3) and the temperature of the measurement cell.

12. Measurement cell according to claim 11,
**characterized in that**
the membranes (2) consist of a film made of a substantially uniform material, respectively.

13. Measurement cell according to claim 11,
**characterized in that**
the membranes (2) are disposed on mechanically supporting supports.

14. Measurement cell according to claim 11,
**characterized in that**
the membranes (2) are disposed on supporting bodies.

15. Measurement cell according to one of claims 11 to 14,
**characterized in that**
respectively two sample chambers with their associated measurement chambers and having the same membrane combination are combined into one difference measurement cell.

16. Measurement cell according to one of claims 11 to 15,
**characterized in that**
the sample chamber (1) consists of a number of interconnected individual chambers.

17. Measurement cell according to one of claims 11 to 16,
**characterized in that**
one of the measurement chambers (3) is separated from the sample chamber (1) by a membrane (2) which is well-permeable for all gases.


**Revendications**

1. Procédé de mesure pour déterminer les concentrations de gaz individuels dans un milieu fluide,
**caractérisé en ce que**
le fluide à analyser, ou les gaz contenus dans le fluide, sont guidés à travers au moins une chambre à échantillon d'une cellule de mesure, à partir de laquelle ils peuvent passer par perméation dans des chambres de mesure fermées et pouvant être remplies d'un gaz de lavage, à travers respectivement une membrane perméable de manière spécifique aux gaz, **en ce que** le laps de temps du changement de pression dans la chambre de mesure respective, qui dépend de la concentration des composants gazeux et du gaz de lavage choisi, et la température de la cellule de mesure sont mesurés et enregistrés, et que les concentrations cherchées en sont déterminées par un système d'équations, la mesure étant contrôlée par un critère de qualité et d'arrêt indépendant.

2. Le procédé selon la revendication 1,
**caractérisé en ce que**
les gaz à analyser sont obtenus à partir du fluide, par séparation de phases, avant l'introduction dans la chambre de mesure.

3. Le procédé selon la revendication 1 ou 2,
**caractérisé en ce que**
la chambre à échantillon est purgée au moyen d'un gaz de lavage connu avant une mesure alors que les chambres de mesure sont fermées.

4. Le procédé selon la revendication 1 ou 2,
**caractérisé en ce que**
les chambres de mesure sont purgées de façon continue au moyen d'un gaz de lavage avant une mesure alors que le fluide à analyser, ou les gaz contenus dans le fluide, sont déjà guidés à travers la chambre de mesure, et que le débit de gaz de lavage est interrompu au début d'une mesure.

5. Le procédé selon la revendication 2,
**caractérisé en ce que**

- la chambre à échantillon de la cellule de mesure est reliée à une conduite annulaire étanche aux gaz et remplie de gaz, dans laquelle est insérée un élément de prélèvement d'échantillon qui est placé dans un lieu nécessitant une supervision, en contact avec le fluide à analyser,
- après un changement de pression dans la chambre à échantillon, le gaz accumulé dans l'élément de prélèvement d'échantillon est amené dans la chambre à échantillon, et le débit de gaz de lavage à travers les chambres de mesure est initié,
- et qu'après le réglage d'une pression d'équilibre dans la chambre à échantillon, le débit de gaz de lavage dans les chambres de mesure est interrompu, et la mesure des composants de gaz individuels est initiée.

6. Le procédé selon la revendication 5,
**caractérisé en ce que**
le dispositif de mesure constitué d'une cellule de mesure, d'une conduite annulaire, et d'un élément de prélèvement d'échantillon est construit en tant que système modulaire.

**7.** Le procédé selon les revendications 4 à 6, **caractérisé en ce que** les chambres de mesure sont fermées avec un délai temporel, après l'interruption du débit de gaz de lavage.

**8.** Le procédé selon les revendications 3 ou 4, **caractérisé en ce qu'** une mesure n'est effectuée avant que le changement de pression temporel dans la chambre à échantillon et/ou dans les chambres de mesure ait décru jusqu'à zéro.

**9.** Le procédé selon l'une des revendications précédentes, **caractérisé en ce qu'** au moins deux chambres à échantillon sont prévues dont les chambres de mesure qui leur sont associées comprennent des membranes par paires ayant la même sélectivité des gaz, et que le laps de temps de la pression différentielle de paires de chambres de mesure est mesuré.

**10.** Le procédé selon l'une des revendications précédentes, **caractérisé en ce que** la pertinence des pressions partielles déterminées est vérifiée, selon la loi de Dalton, à partir d'une mesure de la pression dans la chambre à échantillon de la cellule de mesure ou dans une chambre de mesure ayant une membrane bien perméable à tous les gaz, et qu'une barrière d'arrêt pour la mesure est définie selon ce critère indépendant, au moyen d'une barrière de précision à établir.

**11.** Cellule de mesure pour déterminer les concentrations de gaz individuels dans un milieu fluide, **caractérisée en ce qu'**

- une chambre (1) à échantillon dotée d'une entrée et une sortie (4, 5) de gaz par lesquelles le fluide à analyser, ou les gaz contenus dans le fluide, ou un gaz de lavage peuvent être introduits et évacués, est prévue,
- plusieurs chambres (3) de mesure distinctes qui sont séparées de la chambre (1) à échantillon par respectivement une membrane (2) perméable de manière spécifique aux gaz sont adjacentes à la chambre (1) à échantillon,
- les chambres (3) de mesure sont dotées d'une entrée et une sortie (4, 5) de gaz obturables prévues pour un gaz de lavage, ou qu'elles sont fermées,
- un capteur (T) de température est disposé à la cellule de mesure,
- et que la chambre (1) à échantillon et les chambres (3) de mesure sont dotées de capteurs ($P_0$, $P_A$, $P_B$) de pression qui sont reliés à un dispositif d'enregistrement enregistrant le laps de temps du changement de la pression dans la chambre (3) de mesure respective ainsi que la température de la cellule de mesure.

**12.** La cellule de mesure selon la revendication 11, **caractérisée en ce que** les membranes (2) consistent en un film respectif fabriqué en un matériau essentiellement uniforme.

**13.** La cellule de mesure selon la revendication 11, **caractérisée en ce que** les membranes (2) sont disposées sur des supports de soutien mécanique.

**14.** La cellule de mesure selon la revendication 11, **caractérisée en ce que** les membranes (2) sont disposées sur des corps de soutien.

**15.** La cellule de mesure selon l'une des revendications 11 à 14, **caractérisée en ce que** respectivement deux chambres à échantillon avec leurs chambres de mesure associées et ayant la même combinaison de membranes sont réunies en une cellule de mesure de différence.

**16.** La cellule de mesure selon les revendications 11 à 15, **caractérisée en ce que** la chambre (1) à échantillon consiste en plusieurs chambres individuelles reliées entre elles.

**17.** La cellule de mesure selon l'une des revendications 11 à 16, **caractérisée en ce qu'** une des chambres (3) de mesure est séparée de la chambre (1) à échantillon par une membrane (2) bien perméable à tous les gaz.

Fig. 1

Fig. 2

*10*

*7*

Steuerung (Hard- und Software)

Medienversorgung

Messkammern

Pumpe

Probenahmeraum mit
Drucksensor

*8*

*9*

*11*

Probenahmeelement

*12*

*Fig. 3*

1.02

1.015

1.01

1.005

pTot [atm]

1.

0    5   10   15   20   25   30   35

Zeit [100*Sekunden]

**Fig. 4**

1

0.8

0.6

0.4

0.2

pTot [atm]

2.

0     20    40    60    80   100

Zeit [Sekunden]

**Fig. 5**

1.002

1.0015

1.001

1.0005

pTot [atm]

3.

0    5   10   15   20   25   30   35

Zeit [100*Sekunden]

**Fig. 6**

**Tab. 1:** Gaspermeabilitäten für ausgewählte Dünnschicht-Polymere in $m^3/(m^2$ h·bar)

| Polymer | $O_2$ | $N_2$ | $CO_2$ |
|---|---|---|---|
| 1. Polyetherimid | 0.0086 | 0.0012 | 0.029 |
| 2. Polydimethylsiloxan | 0.6 | 0.76 | 8.7 |
| 3. Spezialpolymer | 0.001 | 0.0002 | 0.0052 |

1. & 2. aus: Polymerhandbook. 1th Edition J. Brandrup, E. H. Immergut, E. A. Grulke, Wiley Publisher, 1999

3. aus: Entwicklung des GKSS-Institutes für Chemie Kantstrasse 55, 14513 Teltow

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19624844 C2
- DE 19705195 A1
- US 5469732 A
- US 4112737 A
- US 3871228 A
- US 4662210 A
- US 5763762 A
- DE 19925842 A1